# EUROPEAN PATENT APPLICATION

(11) **EP 4 592 116 A1**
(43) Date of publication of application: **30.07.2025**
(21) Application number: 24221694.3
(22) Date of filing: 19.12.2024
(51) Int. Cl.: B60K 1/00

(54) **ELECTRIFIED VEHICLE**

(30) Priority: 23.01.2024 JP 2024008289
(71) Applicant: TOYOTA JIDOSHA KABUSHIKI KAISHA, Aichi-ken, 471-8571 (JP)
(72) Inventor: KANADA, Yuichiro, Toyota-shi, 471-8571 (JP); TAKENAKA, Tetsuhiro, Toyota-shi, 471-8571 (JP); YOSHIKAWA, Makoto, Toyota-shi, 471-8571 (JP); URANO, Hiroaki, Toyota-shi, 471-8571 (JP); TSUCHIDA, Michitaka, Toyota-shi, 471-8571 (JP)
(74) Representative: D Young & Co LLP

(57) **Abstract**

An electrified vehicle (10) includes a drive device (20) and in-vehicle components that are not directly connected to the drive device (20). The drive device (20) includes an electric motor (31), a first casing (34) that accommodates the electric motor (31), a power conversion device that is electrically connected to the electric motor (31), and a second casing (74) that is situated upward or downward from the first casing (34) and is fixed to the first casing (34), and that also houses the power conversion device, An accommodation space (SP1) that passes through the drive device (20) in a vehicle front-rear direction is provided between the first casing (34) and the second casing (74). Part of the in-vehicle components are situated within the accommodation space (SP1).

## Description

### BACKGROUND OF THE INVENTION

### 1. Field of the Invention

The technology disclosed in the present specification relates to an electrified vehicle. In particular, the technology relates to an electrified vehicle equipped with a drive device.

### 2. Description of Related Art

Japanese Unexamined Patent Application Publication No. 2021-112116 (JP 2021-112116 A) discloses a drive device that accommodates both a rotating electric machine and an inverter device situated upward from the rotating electric machine in the same casing.

### SUMMARY OF THE INVENTION

In JP 2021-112116 A, increase in size of the casing that accommodates both the rotating electric machine and the inverter device may cause difficulties in layout of in-vehicle components that are not directly connected to the drive device. The present disclosure provides technology for improving degree of freedom in layout of in-vehicle components.

An electrified vehicle according to an aspect of the present disclosure includes a drive device configured to drive a drive wheel of the electrified vehicle, and an in-vehicle component that is not directly connected to the drive device. The drive device includes an electric motor, a first casing that accommodates the electric motor, a power conversion device that is electrically connected to the electric motor, and a second casing that is situated upward or downward from the first casing and is fixed to the first casing, and that also accommodates the power conversion device. An accommodation space that passes through the drive device in a vehicle front-rear direction is provided between the first casing and the second casing, and part of the in-vehicle component is situated within the accommodation space.

In the electrified vehicle described above, part of the in-vehicle components that are not directly connected to the drive device are situated in the accommodation space that is situated between the first casing and the second casing. This enables the degree of freedom in the layout of in-vehicle components, including the drive device, which are installed in the electrified vehicle, to be improved.

In an embodiment of the present technology, the first casing may include a housing that extends cylindrically from a first end face to a second end face, and a first cover attached to the first end face of the housing, and a second cover attached to the second end face of the housing. In this case, the second casing may be fixed to the first cover and the second cover.

According to this configuration, a relatively broad accommodation space can be provided between the housing that extends cylindrically and the second casing. This enables part or all of various types of the in-vehicle components to be disposed in the accommodation space.

In an embodiment of the present technology, the first cover may include a first stay that extends toward the second casing, and the second cover may include a second stay that extends toward the second casing. In this case, the second casing may be fixed to the first stay and the second stay. Note however, in another embodiment, the second casing may include a first stay extending toward the first cover and a second stay extending toward the second cover.

In an embodiment of the present technology, the second casing may be situated upward from the first casing. Note however, in another embodiment, the second casing may be situated downward from the first casing.

In one embodiment of the present technology, the drive device may further include a transmission mechanism that is mechanically connected to the electric motor, and a third casing that accommodates the transmission mechanism. In this case, the third casing may be adjacent to the first casing, upward or downward from the second casing. Part of the accommodation space may be situated between the second casing and the third casing.

According to this configuration, a relatively broad accommodation space can be provided not only between the first casing and the second casing, but also between the second casing and the third casing. This enables part or all of various types of the in-vehicle components to be disposed in the accommodation space.

In one embodiment of the present technology, the third casing may be situated forward in the vehicle with respect to the first casing. In this case, the first casing and the third casing may be arrayed along a direction that is displaced downward farther forward in the vehicle. Note however, in another embodiment, the first casing and the third casing may be arrayed along a direction parallel to the vehicle front-rear direction.

In one embodiment of the present technology, the in-vehicle component may include a steering shaft that passes through the accommodation space in the vehicle front-rear direction.

According to this configuration, the degree of freedom in the layout of the steering shaft can be improved.

In one embodiment of the present technology, the electrified vehicle may further include a steering wheel that is situated rearward in the vehicle with respect to the drive device and connected to a rear end of the steering shaft, and that is configured to be operated by a driver, and a steering gear that is situated in forward in the vehicle with respect to the drive device and connected to a front end of the steering shaft, and that is configured to change a steering angle of the drive wheel in accordance with rotation of the steering wheel.

According to this configuration, the steering gear that changes the steering angle of the drive wheels can be disposed forward of the drive device that has a relatively large mass. Thus, steerability of the electrified vehicle can be improved as compared to a configuration in which the drive device is disposed forward of the steering gear.

In one embodiment of the present technology, the in-vehicle component may include heat transfer medium piping that passes through the accommodation space in the vehicle front-rear direction, and that also is connected to an air conditioning device that is configured to perform air conditioning of a vehicle cabin.

According to this configuration, the degree of freedom in the layout of the air conditioning device and the heat transfer medium piping can be improved.

In one embodiment of the present technology, the electrified vehicle may further include a battery that is situated rearward in the vehicle with respect to the drive device and that is configured to supply electric power to the electric motor of the drive device, and a charging inlet that is situated forward in the vehicle with respect to the drive device and that is detachably connected to an external power source. In this case, the in-vehicle component may include a power cable that passes through the accommodation space in the vehicle front-rear direction and that also electrically connects between the battery and the charging inlet.

According to this configuration, the degree of freedom in the layout of the charging inlet and the power cable can be improved.

Details and further improvements of the technique disclosed in the present specification will be described in "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram of an electrified vehicle 10 according to an embodiment;
FIG. 2 is a sectional view taken along line II-II in FIG. 1; and
FIG. 3 is a cross-sectional view taken along line III-III in FIG. 2.

### DETAILED DESCRIPTION OF EMBODIMENTS

### Embodiment

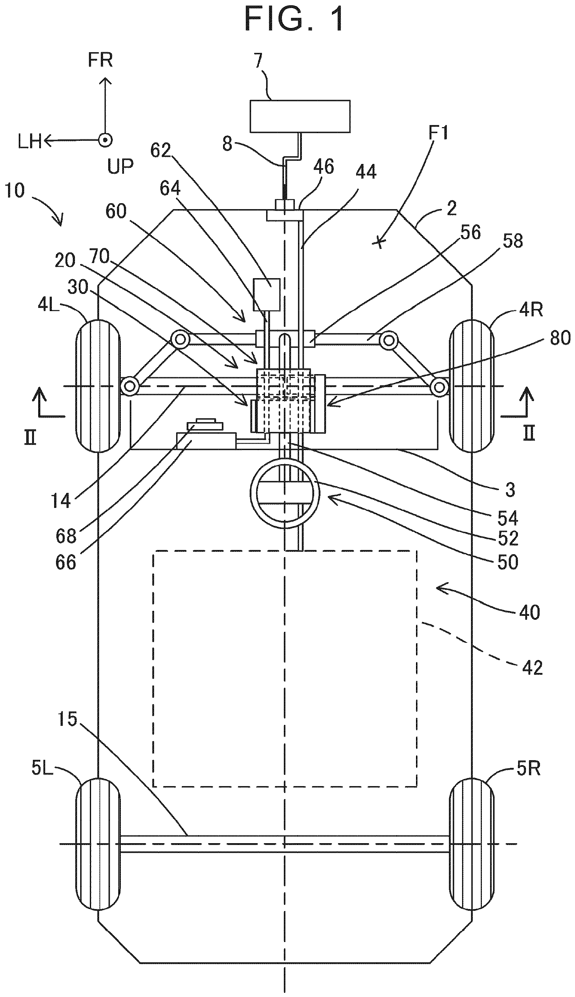

FIG. 1 is a block diagram illustrating an electrified vehicle 10 according to an embodiment as viewed from upward. In the present specification, forward of the electrified vehicle 10 (i.e., upward in the plane of the drawing of FIG. 1) may be simply referred to as "front", and an opposite side thereof may be simply referred to as "rear". Further, leftward of the electrified vehicle 10 (i.e., leftward in the plane of the drawing of FIG. 1) may be simply referred to as "left", and an opposite side thereof may be simply referred to as "right". Also, upward of the electrified vehicle 10 (i.e., a near-side direction of the plane of the drawing of FIG. 1) may be simply referred to as "up", and an opposite side thereof may be simply referred to as "down".

The electrified vehicle 10 includes a vehicle body 2, an instrument panel 3, a pair of right and left front wheels 4R and 4L, a pair of right and left rear wheels 5R and 5L, a front shaft 14, a rear shaft 15, a drive device 20, a battery unit 40, a steering unit 50, and an air conditioning unit 60. The electrified vehicle 10 travels by driving the right and left front wheels 4R and 4L using the drive device 20. Note that the term "electrified vehicle" as used in the present specification includes a rechargeable-type battery electric vehicle that is charged by an external power source, a fuel cell electric vehicle that includes a fuel cell as a power source, a hybrid electric vehicle that also includes an engine, and so forth, for example. Hereinafter, the expression "pair of right and left" may be referred to simply as "right and left".

The drive device 20 includes a motor unit 30, an inverter unit 70, and a transmission mechanism unit 80. The drive device 20 drives the front wheels 4R and 4L via the front shaft 14. That is to say, in the present embodiment, the front wheels 4R and 4L are drive wheels of the electrified vehicle 10. In a modification, the rear wheels 5R and 5L may be the drive wheels of the electrified vehicle 10, or the front wheels 4R and 4L and the rear wheels 5R and 5L may be the drive wheels of the electrified vehicle 10.

The battery unit 40 includes a battery pack 42, a power cable 44 and a charging inlet 46. The battery unit 40 supplies charging electric power of an external power source 7 to the battery pack 42. The battery pack 42 is disposed below a floor panel (omitted from illustration) of the electrified vehicle 10. The battery pack 42 has a lithium-ion battery cell, for example, built in. In a modification, the battery pack 42 may have some other secondary battery cell (nickel-metal hydride battery cell, all-solid-state battery cell) built in. The charging inlet 46 is exposed at a front end of the electrified vehicle 10. The charging inlet 46 is electrically connected to the external power source 7 via an external cable 8. The external cable 8 is detachably connected to the charging inlet 46. That is to say, the charging inlet 46 is detachably connected to the external power source 7. The power cable 44 extends in a vehicle front-rear direction and electrically connects the charging inlet 46 and the battery pack 42. That is to say, the power cable 44 is connected to the drive device 20 via at least the battery pack 42, the vehicle body 2, and so forth, but is not directly connected to the drive device 20.

The steering unit 50 changes traveling direction of the electrified vehicle 10 in response to operations performed by a driver. The steering unit 50 includes a steering wheel 52, a steering shaft 54, a steering gear box 56, and a steering rod 58. The steering wheel 52 is connected to a rear end of a steering shaft 54 and also is a hand wheel that is operated by the driver. The steering shaft 54 extends in the vehicle front-rear direction, and mechanically connects the steering wheel 52 and the steering gear box 56. That is to say, the steering shaft 54 is connected to the drive device 20 via at least the steering rod 58 and the front shaft 14, but is not directly connected to the drive device 20. The steering gear box 56 is provided with a plurality of steering gears. The steering rod 58 includes a plurality of rods and ball joints. When the steering wheel 52 is operated, the steering gears in the steering gear box 56 rotate via the steering shaft 54. This causes the steering rod 58 to be displaced, thereby changing the steering angle of the front wheels 4R and 4L. Thus, the traveling direction of the electrified vehicle 10 changes.

As illustrated in FIG. 1, the steering gear box 56 is situated forward of the drive device 20. The drive device 20 has a relatively large mass. In the electrified vehicle 10 according to the present embodiment, the drive device 20 is situated closer to the center of the electrified vehicle 10 than the steering gear box 56, with respect to the vehicle front-rear direction. Accordingly, as compared to a configuration in which the drive device 20 is situated forward of the steering gear box 56, inertial mass that is generated when the steering unit 50 changes the traveling direction of the electrified vehicle 10 can be reduced. This improves the steerability of the electrified vehicle 10.

The air conditioning unit 60 includes an air conditioning device 62, heat transfer medium piping 64, a heat exchanger 66, and a fan 68. The air conditioning device 62 is disposed in a front compartment F1 of the electrified vehicle 10. The air conditioning device 62 is an air compressor. The heat transfer medium piping 64 extends in the vehicle front-rear direction, and connects the air conditioning device 62 and the heat exchanger 66. The heat transfer medium piping 64 makes up a path for circulating a heat transfer medium (e.g., antifreeze or water) that is compressed or expanded by the air conditioning device 62, between the air conditioning device 62 and the heat exchanger 66. That is to say, the heat transfer medium piping 64 is connected to the drive device 20 via at least the heat exchanger 66 and the instrument panel 3, but is not directly connected to the drive device 20. The fan 68 supplies conditioned air to a vehicle cabin via the heat exchanger 66 and the instrument panel 3. Thus, the air conditioning device 62 performs air conditioning of the vehicle cabin of the electrified vehicle 10.

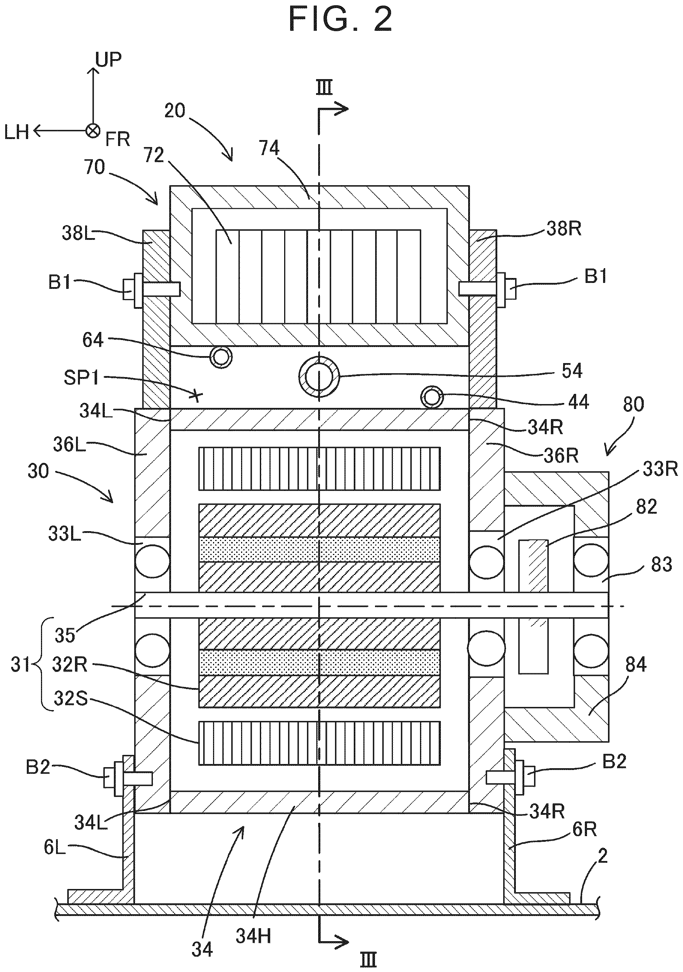

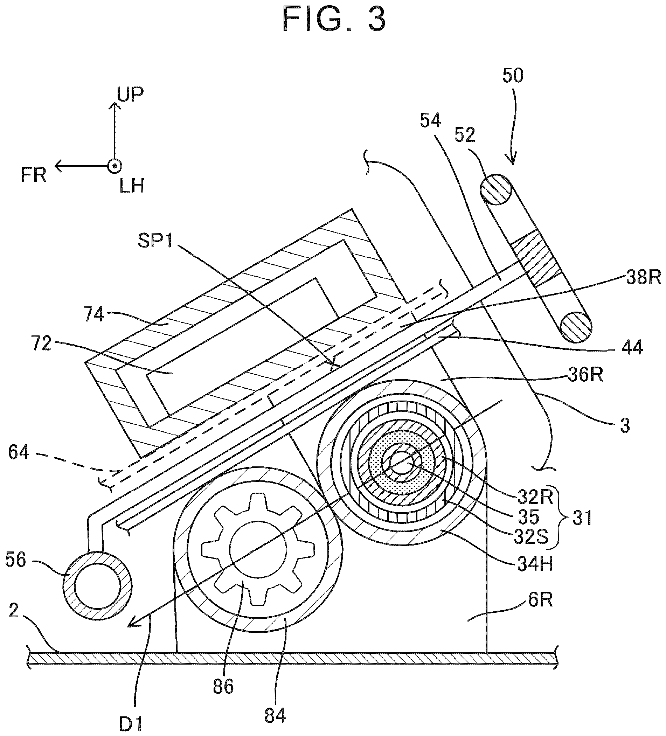

Next, a detailed structure of the drive device 20 will be described with reference to FIGS. 2 and 3. FIG. 2 is a sectional view of the drive device 20 taken along line II-II in FIG. 1. That is to say, FIG. 2 illustrates the structure of the drive device 20 as viewed from rearward. FIG. 3 is a sectional view of the drive device 20 taken along line III-III in FIG. 2. That is to say, FIG. 3 illustrates the structure of the drive device 20 as viewed from leftward.

The motor unit 30 includes an electric motor 31 and a first casing 34. The electric motor 31 includes a rotor 32R having a cylindrical shape extending in the right-left direction, a stator 32S facing an outer peripheral face of the rotor 32R from an outer side in a radial direction, and a motor shaft 35 extending in the right-left direction, passing through the rotor 32R. The rotor 32R includes a permanent magnet. The electric motor 31 is a radial type motor. In a modification, the electric motor 31 may be an axial type motor.

The first casing 34 includes a housing 34H, a first cover 36R, and a second cover 36L. The housing 34H faces an outer peripheral face of the stator 32S of the electric motor 31 from the outer side in the radial direction. A first end face 34R situated at a right end of the housing 34H and a second end face 34L situated at a left end thereof define respective openings. The housing 34H is cylindrical and extends in the right-left direction from the first end face 34R to the second end face 34L.

The first cover 36R is attached from a rightward side to the first end face 34R of the housing 34H. The first cover 36R has a flat plate shape extending in a direction perpendicular to the motor shaft 35 of the electric motor 31, and covers the opening of the first end face 34R of the housing 34H from the rightward side thereof. The first cover 36R is provided with a first bearing 33R. The first bearing 33R rotatably holds the motor shaft 35.

In the same way, the second cover 36L is attached from a leftward side to the second end face 34L of the housing 34H. The second cover 36L has a flat plate shape extending in the direction perpendicular to the motor shaft 35 of the electric motor 31, and covers the opening of the second end face 34L of the housing 34H from the leftward side thereof. The second cover 36L is provided with a second bearing 33L. The second bearing 33L rotatably holds the motor shaft 35.

The first cover 36R includes a first stay 38R extending upward from an upper end of the first cover 36R toward the inverter unit 70. In the same way, the second cover 36L includes a second stay 38L extending upward from an upper end of the second cover 36L toward the inverter unit 70.

The inverter unit 70 includes an inverter 72 and a second casing 74. The inverter 72 is a power conversion device that converts direct current electric power of the battery pack 42 into alternating current electric power that is suitable for the electric motor 31. Further, the inverter 72 may include a converter function for boosting the direct current electric power of the battery pack 42, for example. The second casing 74 accommodates the inverter 72.

The first stay 38R and the second stay 38L of the motor unit 30 extend toward the second casing 74 of the inverter unit 70. A right end of the second casing 74 of the inverter unit 70 is fixed to the first stay 38R of the motor unit 30 via a bolt B1. In the same way, a left end of the second casing 74 is fixed to the second stay 38L via a bolt B1. Accordingly, the second casing 74 of the inverter unit 70 is held upward from the first casing 34 of the motor unit 30.

Also, the first cover 36R of the motor unit 30 is fixed to the vehicle body 2 via a first bracket 6R and a bolt B2. Similarly, the second cover 36L is fixed to the vehicle body 2 via a second bracket 6L and a bolt B2. Thus, the drive device 20 is installed in the vehicle body 2.

A transmission mechanism unit 80 is attached to the first cover 36R. The transmission mechanism unit 80 includes a plurality of gears 82 and 86 (see FIG. 3), and a third casing 84 that accommodates these. The motor shaft 35 of the electric motor 31 passes through the first cover 36R and extends further rightward, and is rotatably held by a third bearing 83 of the third casing 84. The motor shaft 35 rotates the gear 82 within the third casing 84. The third casing 84 has a side portion extending in the front-rear direction to the right of the motor unit 30, and a front portion situated forward of the motor unit 30. As illustrated in FIG. 3, the gear 86 is accommodated in the front portion of the third casing 84. The gear 86 is fixed to the front shaft 14. The gear 82 and the gear 86 are engaged with each other via a plurality of gears (omitted from illustration). When the gear 82 is rotated by the motor shaft 35, the gear 86 rotates, and the front wheels 4R and 4L are driven via the front shaft 14 (see FIG. 1).

As described above, the second casing 74 of the inverter unit 70 is held upward from first casing 34 of the motor unit 30 by the first stay 38R of the first cover 36R of the motor unit 30, and the second stay 38L of the second cover 36L. The stays 38R and 38L extend upward from the covers 36R and 36L, respectively. Accordingly, a lower face of the second casing 74 is spaced apart from an upper face of the housing 34H over the entire range of the housing 34H of the first casing 34. As a result, an accommodation space SP1 that is broad, having a width that is the same as the length from the first end face 34R to the second end face 34L of the housing 34H, is provided between the second casing 74 and the housing 34H that extends cylindrically. Accordingly, part or all of various components such as the power cable 44, the steering shaft 54, and the heat transfer medium piping 64, for example, can be disposed in the accommodation space SP1. Further, attaching the second casing 74 to the covers 36R and 36L of the first casing 34 enables the accommodation space SP1 to be provided between the second casing 74 and the first casing 34 with a simpler configuration as compared with, for example, a configuration in which the second casing 74 is fixed by a bracket separate from each cover 36R and 36L.

As illustrated in FIG. 3, the accommodation space SP1 passes through the drive device 20 in the vehicle front-rear direction. The power cable 44 passes through the accommodation space SP1 and electrically connects the charging inlet 46 and the battery pack 42. The steering shaft 54 passes through the accommodation space SP1 and mechanically connects the steering wheel 52 and gears of the steering gear box 56. The heat transfer medium piping 64 passes through the accommodation space SP1 and connects the air conditioning device 62 and the heat exchanger 66 by fluid. That is to say, a portion of the power cable 44 is situated within the accommodation space SP1. In the same way, a portion of the steering shaft 54 and a portion of the heat transfer medium piping 64 are situated within the accommodation space SP1.

### Effects of Present Embodiment

In the electrified vehicle 10 according to the present embodiment, part of the power cable 44, the steering shaft 54, and the heat transfer medium piping 64, which are not directly connected to the drive device 20, are situated in the accommodation space SP1, which is situated between the first casing 34 and the second casing 74. This enables the degree of freedom in the layout of the power cable 44, the steering shaft 54, and the heat transfer medium piping 64, to be improved. As a result, the degree of freedom of layout of the drive device 20 installed in the electrified vehicle 10, the charging inlet 46 to which the power cable 44 is connected, the steering gear box 56 to which the steering shaft 54 is connected, and the air conditioning device 62 to which the heat transfer medium piping 64 is connected, can be improved. As a result, the accommodation space within the front compartment F1 can be utilized more effectively.

Further, as illustrated in FIG. 3, the front portion of the third casing 84 of the transmission mechanism unit 80 is adjacent to forward of the first casing 34 of the motor unit 30. The accommodation space SP1 is also provided between a front part of the third casing 84 and the second casing 74. A front part of the accommodation space SP1 is situated between the second casing 74 and the third casing 84. In other words, the accommodation space SP1 also passes between the front portion of the third casing 84 and the second casing 74, passing through the drive device 20 in the vehicle front-rear direction. The accommodation space SP1 that is large and extends in the vehicle front-rear direction can be provided not only between the first casing 34 and the second casing 74 but also between the second casing 74 and the third casing 84. This enables part of components such as the steering shaft 54 extending in the vehicle front-rear direction, for example, to be disposed in the accommodation space SP1.

Further, the front portion of the third casing 84 is disposed downward relative to the first casing 34. That is to say, the front portion of the third casing 84 and the first casing 34 are arrayed along a direction D1 that is displaced downward farther forward in the vehicle. In other words, when viewed from leftward, a straight line connecting the center of the housing 34H of the first casing 34 and the center of the third casing 84 inclines so as to come closer to the vehicle body 2 the farther forward. The first casing 34 and the third casing 84 are arrayed along the direction D1, and accordingly the accommodation space SP1 extends in the vehicle front-rear direction along the direction D1. This enables part of the steering shaft 54 that is inclined upward farther rearward in the vehicle toward the steering wheel 52 to be easily accommodated.

The inverter 72 in the present embodiment is an example of "power conversion device". The power cable 44, the steering shaft 54, and the heat transfer medium piping 64 are examples of "in-vehicle components".

Although specific examples of the technique disclosed in the present specification have been described in detail above, these are merely exemplary, and are not intended to limit the scope of the claims. The technology described in the claims encompasses various modifications and alterations of the specific examples exemplified above. Modifications of the above embodiments will be listed below.

(First Modification) In the above-described embodiment, the second casing 74 of the inverter unit 70 is fixed to each of the covers 36R and 36L of the motor unit 30. In the present modification, the second casing 74 may be fixed to a bracket provided on an upper face of the first casing 34 of the motor unit 30, for example.

### Second Modification

The covers 36R and 36L of the first casing 34 does not need to be provided with stays. In this case, the second casing 74 of the inverter unit 70 may include a pair of stays extending downward toward the first casing 34, and the stays may be fixed to the covers 36R and 36L, respectively.

### Third Modification

The inverter unit 70 may be situated downward from the motor unit 30.

### Fourth Modification

The drive device 20 does not have to include the transmission mechanism unit 80. In this case, the transmission mechanism unit 80 may be disposed away from the drive device 20. In another modification, the third casing 84 of the transmission mechanism unit 80 may be adjacent to the first casing 34 of the motor unit 30 from rearward thereof, or may be adjacent from the right-left direction thereof.

### Fifth Modification

Front parts of the first casing 34 of the motor unit 30 and the third casing 84 of the transmission mechanism unit 80 do not have to be arrayed along the direction D1. The casings 34 and 84 may be arrayed, for example, along the vehicle front-rear direction.

### Sixth Modification

At least one of the power cable 44, the steering shaft 54, and the heat transfer medium piping 64 does not have to pass through the accommodation space SP1. Also, in another modified example, for example, coolant piping that extends in the vehicle front-rear direction from a radiator situated at a front part of the electrified vehicle 10 and supplies coolant to the battery pack 42 may pass through the accommodation space SP1. In this case, the coolant piping is an example of "in-vehicle component."

The technical elements described in the present specification or the drawings exhibit technical utility alone or in various combinations, and are not limited to the combinations set forth in the claims as originally filed. The technology exemplified in the present specification or the drawings may achieve a plurality of objects at the same time, and has technical utility it itself by achieving one of the objects.

## Claims

1. An electrified vehicle (10), comprising:
a drive device (20) configured to drive a drive wheel of the electrified vehicle (10); and
an in-vehicle component that is not directly connected to the drive device (20), wherein
the drive device (20) includes
an electric motor (31),
a first casing (34) that accommodates the electric motor (31),
a power conversion device that is electrically connected to the electric motor (31), and
a second casing (74) that is situated upward or downward from the first casing (34) and is fixed to the first casing (34), and that also accommodates the power conversion device,
an accommodation space (SP1) that passes through the drive device (20) in a vehicle front-rear direction is provided between the first casing (34) and the second casing (74), and
part of the in-vehicle component is situated within the accommodation space (SP1).

2. The electrified vehicle (10) according to claim 1, wherein
the first casing (34) includes
a housing (34H) that extends cylindrically from a first end face (34R) to a second end face (34L), and
a first cover (36R) attached to the first end face (34R) of the housing (34H), and a second cover (36L) attached to the second end face (34L) of the housing (34H), and
the second casing (74) is fixed to the first cover (36R) and the second cover (36L).

3. The electrified vehicle (10) according to claim 2, wherein
the first cover (36R) includes a first stay (38R) that extends toward the second casing (74),
the second cover (36L) includes a second stay (38L) that extends toward the second casing (74), and
the second casing (74) is fixed to the first stay (38R) and the second stay (38L).

4. The electrified vehicle (10) according to claim 1, wherein the second casing (74) is situated upward from the first casing (34).

5. The electrified vehicle (10) according to claim 4, wherein
the drive device (20) further includes a transmission mechanism that is mechanically connected to the electric motor (31), and a third casing (84) that accommodates the transmission mechanism,
the third casing (84) is adjacent to the first casing (34), upward or downward from the second casing (74), and
part of the accommodation space (SP1) is situated between the second casing (74) and the third casing (84).

6. The electrified vehicle (10) according to claim 5, wherein
the third casing (84) is situated forward in the vehicle with respect to the first casing (34), and
the first casing (34) and the third casing (84) are arrayed along a direction that is displaced downward farther forward in the vehicle.

7. The electrified vehicle (10) according to any one of claims 1 to 6, wherein the in-vehicle component includes a steering shaft (54) that passes through the accommodation space (SP1) in the vehicle front-rear direction.

8. The electrified vehicle (10) according to claim 7, further comprising:
a steering wheel (52) that is situated rearward in the vehicle with respect to the drive device (20) and connected to a rear end of the steering shaft (54), and that is configured to be operated by a driver; and
a steering gear that is situated in forward in the vehicle with respect to the drive device (20) and connected to a front end of the steering shaft (54), and that is configured to change a steering angle of the drive wheel in accordance with rotation of the steering wheel (52).

9. The electrified vehicle (10) according to any one of claims 1 to 6, wherein
the in-vehicle component includes heat transfer medium piping (64) that passes through the accommodation space (SP1) in the vehicle front-rear direction, and that also is connected to an air conditioning device that is configured to perform air conditioning of a vehicle cabin.

10. The electrified vehicle (10) according to any one of claims 1 to 6, further comprising:
a battery that is situated rearward in the vehicle with respect to the drive device (20) and that is configured to supply electric power to the electric motor (31) of the drive device (20); and
a charging inlet (46) that is situated forward in the vehicle with respect to the drive device (20) and that is detachably connected to an external power source (7), wherein the in-vehicle component includes a power cable (44) that passes through the accommodation space (SP1) in the vehicle front-rear direction and that also electrically connects between the battery and the charging inlet (46).
